# EUROPEAN PATENT APPLICATION

(11) **EP 2 947 582 A1**
(43) Date of publication of application: **25.11.2015**
(21) Application number: 14817404.8
(22) Date of filing: 02.04.2014
(51) Int. Cl.: G06F 17/30

(54) **COMPUTING DEVICE AND METHOD FOR EXECUTING DATABASE OPERATION COMMAND**

(30) Priority: 29.06.2013 CN 201310270256
(71) Applicant: Huawei Technologies Co., Ltd., Longgang District Shenzhen, Guangdong 518129 (CN)
(72) Inventor: LI, Qiang, Shenzhen Guangdong 518129 (CN); ZHU, Zhongchu, Shenzhen Guangdong 518129 (CN)
(74) Representative: Maiwald Patentanwalts GmbH
(86) International application number: PCT/CN2014/074664
(87) International publication number: WO 2014/206129

(57) **Abstract**

The present invention relates to the field of databases, and discloses a computing device and a method for executing a database operation command. In the present invention, whether an operation requested by an operation command is a read operation is determined; and if the operation requested by the operation command is a read operation, the operation command is executed via authorized access to database server process memory and a query result is obtained, thereby improving data reading performance; or if the operation requested by the operation command is not a read operation, the operation command is forwarded to a database server for executing the operation command, thereby improving reliability of a non-read operation.

## Description

This application claims priority to Chinese Patent Application No. 201310270256.X, filed with the Chinese Patent Office on June 29, 2013 and entitled "COMPUTING DEVICE AND METHOD FOR EXECUTING DATABASE OPERATION COMMAND", which is incorporated herein by reference in its entirety.

### TECHNICAL FIELD

The present invention relates to a database system, and specifically, to a computing device and a method for executing a database operation command.

### BACKGROUND

In an online transaction processing (OLTP: Online Transaction Processing) system, for example, a charging system in the telecommunications industry or a trading system in the securities trading industry, a database plays a central role. The database needs to process massive transaction requests at an extremely high frequency and ensure consistency and availability of data, which requires that the database can provide a very high throughput and very high reliability.

A database client may access a database server in various communication modes. When the database client communicates with the database server by using the Transmission Control Protocol (TCP: Transmission Control Protocol)/Internet Protocol (IP, Internet Protocol), parsing of the TCP/IP protocol occupies a large quantity of instruction cycles of a processor, leading to excessively high consumption of network resources; when the database client makes a request or the database server returns a result, to-be-exchanged memory data needs to be copied to a socket buffer. If the database client communicates with the database server in a domain socket (Domain Socket) manner, resources consumed for protocol parsing are decreased, but the to-be-exchanged memory data still needs to be copied to the socket buffer. When the database client communicates with the database server in an inter-process communication (IPC: Inter-Process Communication) manner, the database server establishes an agent thread to process a request from the database client; when the database client sends a request or the database server returns a result, data in a memory on the server needs to be copied to a communication buffer of the agent thread. Using a socket buffer or a communication buffer is likely to cause a performance bottleneck.

### SUMMARY

Embodiments of the present invention provide a computing device and a method for executing a database operation command, so as to improve performance and reliability of access to a database server by a database client.

According to a first aspect, a computing device for executing a database operation command is provided, including a database client and a database server, where:
the database client is configured to: receive an operation command pertaining to data managed by the database server;
determine whether an operation requested by the operation command is a read operation; and
if the operation requested by the operation command is a read operation, execute the operation command via authorized access to database server process memory and obtain a query result; or
if the operation requested by the operation command is not a read operation, forward the operation command to the database server for executing the operation command.

In a first possible implementation manner of the first aspect, the database client specifically includes a connection interface, a parser, and an executor, where:
the connection interface is configured to receive the operation command pertaining to the data managed by the database server;
the parser is configured to parse the operation command received by the connection interface, determine whether the operation requested by the operation command is a read operation, and if the operation requested by the operation command is a read operation, send the operation command to the executor, or if the operation requested by the operation command is not a read operation, forward the operation command to the database server; and
the executor is configured to execute the operation command sent from the parser, and obtain the query result via the authorized access to the database server process memory.

With reference to the first possible implementation manner of the first aspect, in a second possible implementation manner, the connection interface is further configured to obtain access permission for the process memory of the database server, and request the database server to establish an agent thread.

According to a second aspect, a method for executing a database operation command is provided, which applied to a database client, including:
receiving an operation command pertaining to data managed on a database server;
determining whether an operation requested by the operation command is a read operation; and
if the operation requested by the operation command is a read operation, executing the operation command via authorized access to database server process memory and obtain a query result; or
if the operation requested by the operation command is not a read operation, forwarding the operation command to the database server, for executing the operation requested by the operation command.

In a first possible implementation manner of the first aspect, before the executing the operation command, the method further includes: obtaining access permission for the process memory of the database server, and requesting the database server to establish an agent thread.

With reference to the first possible implementation manner of the first aspect, in a second possible implementation manner, before the obtaining access permission for the process memory of the database server, the method further includes: determining that one or more of the following conditions are met:
a database connection request received by the database client from an application program includes a direct connection indication; and
it is determined that the operation requested by the operation command is a read operation.

According to a third aspect, a computer-readable storage medium is provided, and instructions that can be executed by a processor is stored in the computer-readable storage medium, which causes the processor to process a database operation command, where the instructions include:
receiving an operation command pertaining to data managed on a database server;
determining whether an operation requested by the operation command is a read operation; and
if the operation requested by the operation command is a read operation, executing the operation command via authorized access to database server process memory and obtaining a query result; or
if the operation requested by the operation command is not a read operation, forwarding the operation command to the database server for executing the operation requested by the operation command.

It can be seen from the foregoing technical solutions provided in the embodiments of the present invention that a database client determines whether an operation requested by a received operation command is a kind of read operation, if the operation requested by the operation command is a kind of read operation, executes the operation command by means of authorized access to database server process memory and obtains a query result, and if the operation requested by the operation command is not a kind of read operation, forwards the operation command to a database server, so that the database server executes the operation command. A type of an operation command is determined on a database client. For a read operation, direct access, which is of high performance, to database server process memory is used; for a non-read operation, for example, a write operation, the operation command is forwarded to a database server, and the database server executes the operation command. In this way, a risk that is posed to an internal structure of a database when an initiator of the operation command, for example, an application program, is abnormal can be avoided, thereby improving reliability.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention.
FIG. 1 is a schematic diagram of a network environment according to an embodiment of the present invention;
FIG. 2 is a schematic block diagram of a computing device according to an embodiment of the present invention;
FIG. 3 is a schematic diagram of a mechanism of communication between a database client and a database server according to an embodiment of the present invention;
FIG. 4 is a flowchart of a database query method according to an embodiment of the present invention;
FIG. 5 is a flowchart of a database query method according to another embodiment of the present invention; and
FIG. 6 is a schematic structural diagram of a database client according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

In an embodiment of the present invention, to increase a throughput of a database, a database client and a database may be deployed on a same machine, so that an application program locally accesses a database server by using the database client, thereby avoiding overheads of remote network communication. The database client may access the database server in a direct connection manner, that is, the database client is directly attached (attach) to database server process memory to access the database server process memory, to further increase the throughput of the database. A database server process refers to a process that implements a request from the database client and operation and administration of the database. The database server process memory refers to memory allocated to the process.

However, the direct connection manner also has a reliability problem. Because an internal structure of the database server process is completely exposed to an application program that invokes the database client, an abnormal operation of the application program, for example, out-of-bound access of a pointer, may damage the internal structure of the database server process, and consequently, the database crashes and cannot be recovered. Even if coding of the application program complies with specifications, exit of the application program and forcible ending of an application process due to external force majeure may still result in a consistency problem caused by incomplete modification of data in the database. If a detailed log is recorded for modification of the data to facilitate recovery, there may be an excessively large volume of logs. According to the embodiments of the present invention, it is determined whether an operation command belongs to a read operations; for a read operation, a database client accesses database server process memory in a direct connection manner, and for a non-read operation, the direct connection manner is not used. In this way, a risk of damaging a content structure of a database server process is reduced, and reliability is improved.

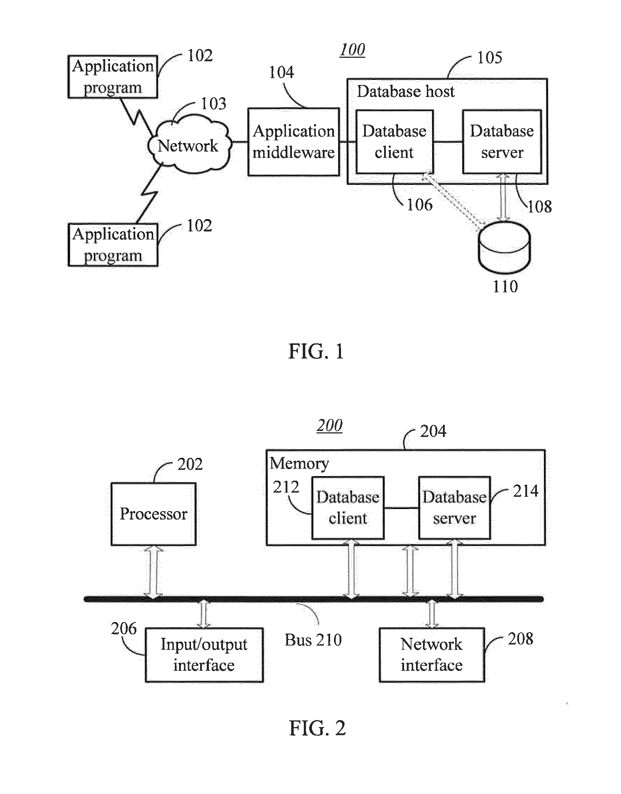

FIG. 1 is a schematic diagram of a network environment according to an embodiment of the present invention. An application program 102 refers to a computer program that may provide various specific functions, and includes but is not limited to a charging application, an Internet browser, a multimedia player and the like. The application program may access a database system by using a communications network 103. Multiple application programs may invoke a database client 106 via using application middleware 104. A database host (database host) 105 includes the database client 106 and a database server 108.

The database client 106 is configured to receive an operation command, pertaining to data managed by the database server, from the application program, and connect to and access the database server. Particularly, in a direct connection manner, the database client 106 may obtain authorized access to database server process memory, and execute the operation command. The database server 108 is configured to manage data, and execute an operation command forwarded by the database client.

Further, the database server 108 in the database host 105 is further connected to a storage engine 110. The storage engine 110 stores data of a database, and is a structured data set. The database client 106 or the database server 108 may drive the storage engine 110, and receive data returned by the storage engine. For example, the storage engine 110 may be incorporated in the database server 108, that is, integrated with the database server 108, or may be located in a memory outside the database server.

FIG. 2 is a schematic block diagram of a computing device according to an embodiment of the present invention. In the embodiment, the computing device may be a computer host, and specifically includes a processor-based computer, for example, a general-purpose personal computer (PC), a portable device such as a tablet computer, or a smartphone. As shown in FIG. 2, a computing device 200 may include a bus 210, a processor 202, a memory 204, an input/output interface 206, and a communication interface 208. The bus 210 may include a channel for transferring information among parts of the computer. The processor 202 is configured to process information, and execute an instruction or an operation, and may be specifically a general-purpose central processing unit (CPU), a microprocessor, an application-specific integrated circuit (application-specific integrated circuit, ASIC), or one or more integrated circuits configured to control program execution in the solutions of the present invention. The computing device further includes one or more memories 204 configured to store information and an instruction, the memory may be a read-only memory (read-only memory, ROM) or another type of static storage device that can store static information and an instruction, a random access memory (random access memory, RAM) or another type of dynamic storage device that can store information and an instruction, or may be a magnetic disk memory. The memories are connected to the processor 202 by the bus 210.

The input/output interface 206 may include an input apparatus or an output apparatus. The input apparatus, for example, a keyboard, a mouse, a camera, a scanner, a light pen, a voice input apparatus, or a touchscreen, is configured to receive data and information that are input by a user. The output apparatus, for example, a display screen, a printer, or a loudspeaker, is configured to allow information to be output or displayed to the user. The computing device further includes a network interface 208. The network interface uses any apparatus similar to a transceiver to facilitate communication with another device or a communications network, for example, an Ethernet network, a radio access network (RAN), or a wireless local area network (WLAN). The processor 202 may also be connected to the input/output interface 206 and the network interface 208 by the bus 210.

The memory 204 stores a program that executes the solutions of the present invention, and includes a database client 212 and a database server 214. The memory 204 may further store an operating system and another application program. The database client 212 is configured to: receive an operation command, for data managed by the database server, of an application program; determine whether an operation requested by the operation command is a read operation; and if the operation requested by the operation command is a read operation, execute the operation command via authorized access to database server process memory and obtain a query result; or if the operation requested by the operation command is not a read operation, forward the operation command to the database server, so that the database server executes the operation requested by the operation command. Generally, functions of the database client 212 include: establishing a connection (connect) to the database server, preparing (prepare) a database operation command, executing (execute) an operation command, and fetching (fetch) an execution result. The database client 212 provides a unified application programming interface (API) for application programs.

After receiving the operation command forwarded by the database client 212, the database server 214 executes the operation command, and returns an execution result. Specifically, the database server provides a database service for the database client, for example, one or more of query, update, transaction management, indexing, high-speed caching, query optimization, security, and multi-user access control. In the embodiment of the present invention, the database client 212 and the database server 214 are located on a same server or host, that is, the database client can be locally connected to the database server.

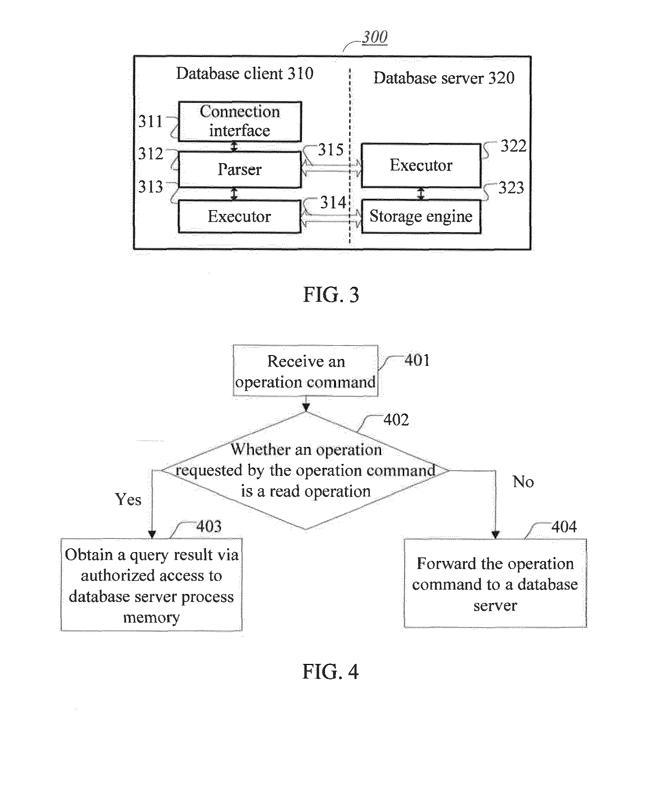

FIG. 3 is a schematic diagram of a mechanism of communication between the database client and the database server that are shown in FIG. 2. According to an embodiment shown in FIG. 3, a database client 310 specifically includes a connection interface 311, a parser 312, and an executor 313 logically. The connection interface 311 is configured to receive an operation command pertaining to data managed by a database server. When an application program needs to operate the data managed by the database server, the application program sends an operation command to the database client, and invokes a database service by using the connection interface 311. The connection interface 311 is further configured to establish a connection between the database client and the database server, and transfer the operation command and a corresponding operation result. The operation command may carry a version number of to-be-operated data in the database server, where the version number is used for identifying whether a database structure is changed.

The parser 312 parses the database operation command received by the connection interface 311, and compiles the operation command into code that can be recognized by the executor 313. As an implementation manner, parsing of the operation command does not require sending of the operation command to the database server, but is completed by directly invoking, on the database client, a compilation library. In the embodiment of the present invention, after an operation command is compiled, the parser 312 determines whether an operation requested by the operation command is a read operation, and if the operation requested by the operation command is a read operation, executes the operation command via authorized access 314 to database server process memory by the executor 313 of the database client and obtain a query result; if the operation requested by the operation command is not a read operation, the parser 312 forwards the operation command to the database server via a communication connection 315, so that the database server executes the requested operation. As an implementation manner, the parser 312 is provided, in a manner of a dynamic link library, for the database client for invoking.

The executor 313 of the database client is configured to execute (execute) an operation command that belongs to read operations and that is sent by the parser 312, execute the operation command via the authorized access 314 to the database server process memory, and obtain a query result. After obtaining access permission for the database server process memory, the executor 313 may drive a storage engine 323 of the database server to execute the operation command, read data stored in a database, and obtain the query result. Specific implementation of the obtaining, by the database client, access permission for the database server process memory is: the executor 313 of the database client attaches (attach) to the database server process memory, and obtains a start address of the database server process memory and an offset. When the database client accesses the database server process memory, addressing is performed in a manner of the start address plus the offset.

The database server 320 includes an executor 322 and the storage engine 323. The executor 322 of the database server receives, by using the communication connection 315, the operation command which is compiled and forwarded by the parser 312, accesses the database server process memory by using an established agent thread, drives the storage engine 323 to execute the operation command, and returns an execution result to the database client. Specifically, when the communication connection 315 is established at the connection interface 311, an agent thread is established in the executor 322, where the agent thread may access the database server process memory, drive the storage engine 323, and execute the operation command. After obtaining the query result, the agent thread copies the query result to a communication buffer of the agent thread, and returns the query result to the database client by using the communication connection 315. The agent thread is an entity established by a database server process for executing an operation request of a database client, and may share a resource (for example, memory) of the database server process. One database server process includes multiple agent threads for the database client and background threads. The storage engine 323 is configured to store the data of the database, is driven by the executor 322, and returns data requested by the operation command executed by the executor 322. In addition, the storage engine 323 may also be driven by the executor 313 of the database client 310, and return data requested by the executor 313.

The database server 320 may also include a parser (not shown in FIG. 3). When the connection interface 311 of the database client determines that a direct connection manner is not used, for example, a TCP/IP manner is selected for a connection to the database server, the connection interface 311 directly sends the operation command to the parser of the database server. The parser of the database server receives the operation command forwarded by the connection interface 311 of the database client, and parses the operation command into code that can be recognized by the executor 322 of the database server. In some scenarios, for example, when the database client and the database server are not located on a same host, or when a database connection request sent by an application program indicates that a direct connection manner is not used, a manner in which the database server parses an operation command may be used.

The determining, by the parser 312 of the database client, whether the operation requested by the operation command is a read operation may specifically be: determining whether the operation requested in the operation command is one operation in a set of preset read operations. The preset read operations refer to a set of pre-specified read-only operations on the database, and do not involve modification of data in the database or a query for data processing. For example, specific operation commands of the read-only operations are: Select * from *table* where *XXX*; select *field* from *table* where *XXX.* In a case in which the operation command is a preset read operation, the database client may obtain the access permission for the process memory of the database server, that is, a direct connection 314 is established between the database client and the database server. The executor 313 of the database client directly accesses the database server process memory to obtain a query result, without requesting the executor 322 of the database server to establish an agent thread to execute the operation command, thereby ensuring high data reading performance.

In a case of an operation except the preset read operations, for example, operations as insertion, update, or deletion of a database record and data definition language and data control language, the connection interface 311 applies to the database server for establishment of an agent thread, and establishes the communication connection 315 between the database client and the database server. In this case, a manner of directly connecting the database client and the database server is not used, and the database client does not obtain the access permission for the database server process memory. The communication connection 315 between the database client and the database server may be established by using one mechanism of inter-process communication (IPC), TCP/IP protocol, and domain socket, so as to implement communication between the parser 312 and the agent thread. By using the communication connection 315, the operation command of the database client is forwarded from the parser 312 to the agent thread in the executor 322 of the database server. Then, the agent thread completes execution of these database operation commands except the preset read operation. The agent thread may directly access the database server process memory and obtain an operation result. Then, the agent thread copies the operation result to a communication buffer of the agent thread, and returns the operation result to the database client by using the communication connection 315. The operation result may be a data query result, or may be a code indicating whether the operation is successful.

The direct connection 314 or the communication connection 315 between the database client 310 and the database server 320 may be established by using the connection interface 311 after the parser determines that the operation requested by the operation command is one operation in the set of preset read operations, or may be established after the connection interface 311 of the database client receives the database connection request sent by the application program. Generally, establishment of a connection between a database client and a database server is relatively time-consuming; after being established, a direct connection or a communication connection is applicable to an entire database session period and is used for exchanging an operation command and an operation result between the database client and the database server multiple times. However, after multiple operation commands are parsed, there may be multiple corresponding query types, including both a preset read operation and a non-preset read operation. Therefore, when a connection is initially established between the database client and the database server, a preferred manner is to establish a direct connection 314 to the database server and establish a standby communication connection 315. The communication connection 315 forwards an operation command from the parser 312 to the executor 322 of the database server. If a query is executed only once or it is determined that all subsequent queries are preset read operations or non-preset read operations, it may also be specified that only one type of the direct connection 314 and the communication connection 315 is established.

For example, after the connection interface 311 of the database client receives the database connection request sent from the application program, if the connection interface 311 determines that the database client and the database server are on a same host or server, which meets a condition for establishing a direct connection, then the direct connection 314 to the database server may be automatically established, and the standby communication connection 315 is established.

If the connection interface 311 finds that any one of the following conditions is met, it is determined that the database client needs to obtain the access permission for the database server process memory:

One condition is that the database connection request sent by the application program includes a direct connect indication (direct connect). The connection interface 311 obtains the access permission for the database server process memory according to the direct connect indication, that is, the direct connection 314 to the database server is established. The standby communication connection 315 may further be established between the connection interface and the database server. The communication connection 315 may be established by using one method of inter-process communication (IPC), Transmission Control Protocol/Internet Protocol (TCP/IP), and domain socket (domain socket), and a specific method is determined according to preset configuration of a system.

A second condition is that the parser 312 of the database client determines whether the operation requested by the operation command is a read operation; and if the operation requested by the operation command is a read operation, the connection interface 311 establishes the direct connection 314 to the database server; or if what is requested by the operation command is not a read operation, the connection interface 311 establishes the communication connection 315 to the database server.

A method for determining, by the parser 312 of the database client, whether the operation requested by the operation command is one operation in the set of preset read operations may be implemented in the following manner: the parser 312 compares a keyword in the operation command with a keyword of an operation in the set of preset read operations, and if the keyword in the operation command matches the keyword of the operation in the set of preset read operations, it is determined that the operation command is one of the set of preset read operations, or if the keyword in the operation command does not match the keyword of the operation in the set of preset read operations, the operation in the set of preset read operations is replaced by another operation, and the process returns to the step of comparing the keyword in the operation command with a keyword of a preset read operation until a matching result is obtained or comparison with all operations in the set of preset read operations is completed. As another implementation manner, the parser may compare a keyword in the operation command with each keyword of each operation in a set of pre-specified operations that do not belong to preset read operations, and if the keyword in the operation command does not match the keyword in each operation in the set of pre-specified operations that do not belong to preset read operations, it is determined that the operation command is a read operation.

The determining, by the parser 312 of the database client, whether the operation requested by the operation command is a read operation may be further implemented in another manner: the parser 312 determines whether the operation requested by the operation command is a read operation according to a name or an attribute of the operation command. In this manner, a read operation command has a specific name or attribute, which may be used to determine whether the operation is a read operation.

Actually, for an OLTP system, most database operation commands are queries, most of which are simple read-only queries, for example, select *Field* or * from *Table* where *Query condition.* According to the embodiment of the present invention, parsing of an operation command is performed in advance on a database client, and a direct connection is used for a read operation to improve database performance. For write operations, such as insert, delete, or modify, a communication connection, for example, an IPC connection, is used, and an agent thread is established, so as to avoid a risk of writing-caused damage that is posed to an internal structure of a database by an application program exception, and meanwhile to ensure reliability of a database system.

FIG. 4 is a flowchart of a database query method according to an embodiment of the present invention. The method may be executed by the database client and the database server that are shown in FIG. 1 to FIG. 3, but is limited to this operating environment.

In step 401, a database client receives an operation command pertaining to data managed by a database server.

Specifically, when an application program needs to process specified data managed by the database server, the application program sends an operation command to the database client. The operation commands have operation types, such as create, query, modify, or update, etc.

A parser of the database client parses the received operation command, and compiles the operation command into code that can be understood by an executer of the database client. As an implementation manner, when parsing the operation command, if the operation command carries a version number of to-be-operated data in the database server, the database client obtains a version number of a to-be-operated data object related to the operation command, for example, a version number of a table structure or a column name. A reason for using a version number is that parsing of the operation command is performed in advance in the parser 312 of the database client, and it may occur that, when executing an operation command, the executor 313 of the database client or an executor 322 of the database server finds that a structure of a table to be queried has been changed, for example, a field has been deleted or an index used for scanning has been deleted, which leads to an operation exception. The version number of the to-be-operated data object is carried in the operation command, so that the executor 313 of the database client or the executor 322 of the database server may, before executing the operation command, determine whether a data version number that is obtained from the operation command is consistent with a data version number in the storage engine 323, thereby reducing occurrences of exceptions.

In step 402, the database client determines whether the operation requested by the operation command is a read operation, and if the operation requested by the operation command is a read operation, step 403 is executed, or if the operation requested by the operation command is not a read operation, step 404 is executed.

The determining whether the operation requested by the operation command is a read operation includes: determining whether the operation requested by the operation command is one operation in a set of preset read operations. The preset read operations refer to a set of pre-specified read-only operations on a database, where database data is read by a query condition, for example, select *Field* or * from *Table* where *Condition,* which does not involve modification of or further processing on the data in the database. An operation outside preset read operations is an operation that involves modification of data in the database, including insert, update, delete, or database operations in a data definition language (DDL) and a database control language (DCL). Optionally, an operation outside the preset read operations further includes an operation of performing, after querying data, further computation and analysis on acquired original data, for example, group by (group by), order by (order by), aggregate, and subquery.

The determining, by the database client, whether the operation requested by the operation command is one operation in a set of preset read operations comprises: comparing each keyword in the operation command with a keyword of an operation in the set of preset read operations, and if a matching case is found, determining that the operation command is an item of preset read operation. For example, keywords in an operation command include select, from, where and match keywords of a preset read operation "select *Field* or * from *Table* where *Condition",* and then it is determined that the operation requested by the operation command is one operation in the set of preset read operations. However, when a keyword in an operation command includes delete, a matching case is not found in the preset read operations, and it is determined that the operation command does not belong to one operation in the set of preset read operations.

As another implementation manner, the determining, by the database client, whether the operation requested by the operation command is a read operation comprises: pre-specifying a set of operation statements that do not belong to preset read operations; comparing a keyword in the operation command with a keyword of each operation that does not belong to the preset read operations, and if the keyword in the operation command does not match the keyword of each operation that does not belong to the preset read operations, determining that the operation requested by the operation command is a read operation, or if there is a matching case, determining that the operation command does not belong to a read operation.

The determining whether an operation requested by the operation command is a read operation may also be implemented in another manner: determining whether the operation requested by the operation command is a read operation according to a name or an attribute of the operation command. In this manner, a read operation command has a specific name or attribute, which is used to determine whether the operation is a read operation.

In step 403, the operation command is executed via authorized access to database server process memory and a query result is obtained.

In a case in which the operation command belongs to read operations, the database client executes, by means of direct access to the database server process memory, that is, by means of a direct connection to the database server, the operation command to read requested data. The obtaining, by the database client, access permission for the database server process memory specifically includes: attaching (attach) the database client to the database server process memory and obtaining a start address of the database server process memory and an offset. Specifically, the database client may invoke the storage engine of the database server to execute the operation command and read the data in the database.

The direct connection between the database client and the database server may be established after it is determined that the operation command requests a read operation, or may be established after a connection interface of the database client receives a database connection request sent by the application program. Specifically, before receiving a database operation command of the application program, the database client receives a connection request sent by the application program. When determining that one or more of the following conditions are met, the database client establishes a direct connection: the database connection request sent by the application program includes a direct connect indication (direct connect), or the database client determines that the operation requested by the operation command is a read operation. For more detailed descriptions, reference may be made to the foregoing embodiments, and details are not repeatedly described herein.

When the database client establishes the direct connection to the database server, a process of the database client is directly attached (attach) to service process memory of the database server, so that access permission for the database server process memory is obtained. Afterwards, when it is determined that the operation requested by the operation command is a read operation, the database server process memory is accessed, the operation command is executed, and related data is read.

When the operation command carries a version number of to-be-operated data, before executing the operation command, the database client compares the version number carried in the operation command with a version number of data stored in the database server to determine whether they are consistent; if the version number carried in the operation command is inconsistent with the version number of the data stored in the database server, an error code is returned to the database client, and re-parsing the operation command is required. The database client accesses the database server process memory, re-parses the operation command, and obtains a current version number of a to-be-operated data object. After the operation command is re-parsed, an operation command carrying a latest version number of the to-be-operated data object is sent to the executor 313 of the database client again. In this manner, during the database client parses an operation command, a problem of an exception caused by a change of a data structure of the database is avoided.

Because different database clients are attached to different start addresses of a database server service process, a corresponding offset is registered in the database server process memory for an attached process of each database client, and the database client obtains the start address of the database server process memory and the offset. When the database server process memory is accessed, addressing on service process memory of the database server takes a manner of a start address + an offset, thereby ensuring correctness of direct connection addressing.

After the database client obtains a query result, a process of the database client is detached (detach) from the service process memory of the database server, that is, the direct connection is released.

As an implementation manner, a type of read operation is a query for all fields in a table. The following operation commands are examples:
Select * from *Table* where *Query condition;* and
*Select field 1, field 2*, ... *(all fields in a table)* from *table* where *query condition*.

A common point of this type of operation command of querying all fields in a table is that all fields in a table are queried, and neither four arithmetic operations nor a function operation needs to be involved. In the database server process memory, an area used for storing an execution result of an operation command is referred to as a cursor. For an operation command for querying all fields in a table, when the database client has permission to access the database server process memory, the database client may obtain an address of a cursor of the queried table from the database server process memory, directly access the cursor, read records by an entire row, and obtain the table records one by one from the cursor, thereby further improving data reading performance.

When the database client parses the operation command, this type of full-table operation command may be identified and registered to a statement handle related to the operation command. The statement handle is a memory area allocated by the database client for the operation command, and is used for recording related information about an operation command, for example, a field identifier in the operation command. Each field in the table queried by the operation command is corresponding to a query identifier ID, and each field has a corresponding storage ID when stored on the database server. Sequential order of the fields in the operation command may be inconsistent with order of the fields stored in the database server process memory. Therefore, not only query IDs (for example, Q1 and Q2) of the fields need to be registered to the statement handle, but also storage IDs (for example, Ml and M2) corresponding to the fields need to be recorded by searching a data dictionary during verification (verify), and a mapping relationship (for example, Q1-M2 and Q2-M1) between a storage ID and a query ID is established. During the verification, information such as a type, a length, and validity of a field is also registered. When the database client reads a record in the table in a unit of an entire row, the fields in the record are sorted according to order of storage IDs. When a query result is to be returned to the application program, order of the fields in the record may be adjusted to order of the fields in the operation command according to the mapping relationship between a query ID and a storage ID, and then the query result is returned and displayed.

In step 404, the database client forwards the operation command to the database server, so that the database server executes the operation requested by the operation command.

In a case of an operation outside the read operations, for example, insert, update, or delete of a database and operations in a data definition language and a data control language, the database client forwards a parsed operation command to the database server by using the communication connection 315. In response to the operation command, an agent thread established by the database server accesses the database server process memory and executes the operation command. After obtaining an operation result, the agent thread copies the operation result to a communication buffer of the agent thread, and returns the operation result to the database client via the communication connection 315. The communication connection 315 is established in a manner such as inter-process communication (IPC), TCP/IP, or domain socket. A specific establishment method is establishment by using an existing technology according to a specific protocol type.

The communication connection 315 between the database client and the database server may be established after it is determined that the operation command is not a read operation, or may be established after the database client receives the database connection request sent by the application program. Specifically, conditions for triggering establishment of the communication connection 315 include one or more of the following conditions: the database connection request sent by the application program includes no direct connect indication, or the database client determines that the operation requested by the operation command is not a read operation. For more detailed descriptions, reference may be made to the foregoing embodiments, and details are not repeatedly described herein.

After receiving an operation command of a non-read operation sent by the database client, the database server establishes an agent thread. The agent thread accesses the database server process memory, invokes the storage engine 322 of the database server to execute the operation requested by the operation command, and obtains a query result. The query result may be put from the database server process memory into a communication buffer of the agent thread, then the query result is returned to the database client by using the communication connection 315, and the database client returns the query result to the application program.

In the foregoing implementation manner, a database client determines whether an operation command is a read operation; for a read operation, a database server process memory may be directly accessed, thereby improving reading performance; for a non-read operation, the operation command is forwarded to a database server by using a communication connection, and the database server establishes an agent thread to execute the operation command, thereby improving reliability.

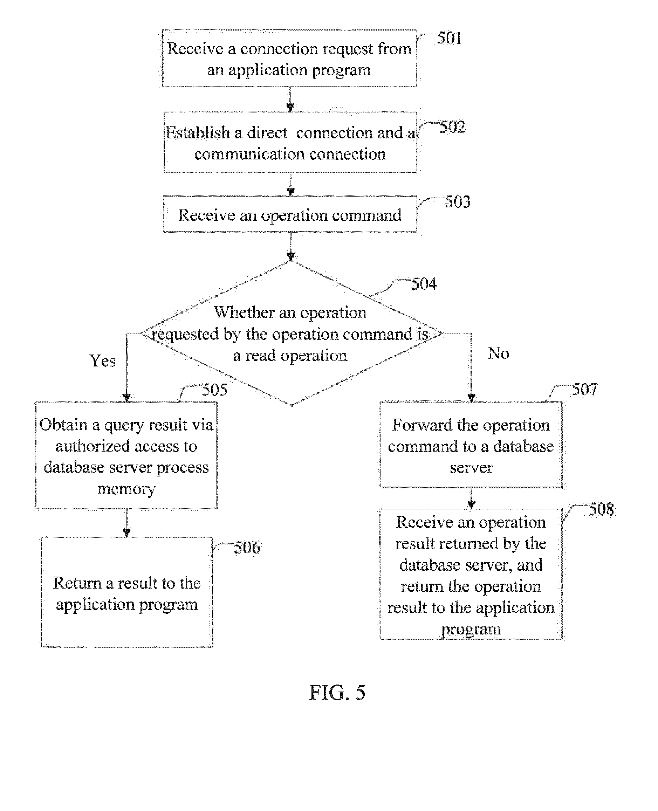

FIG. 5 is a flowchart of a database query method according to another embodiment of the present invention.

In step 501, an application program sends a database connection request to a database client, where the connection request carries a direct connect indication direct connect.

In step 502, the database client establishes a direct connection and a standby IPC communication connection to a database server according to the direct connect indication in the connection request. A manner of establishing a direct connection specifically refers to obtaining, by the database client, access permission for database server process memory. A manner of establishing an IPC connection specifically includes: establishing a communication connection between the database client and the database server by using an IPC mechanism, establishing, by the database server, an agent thread, and accessing, by the agent thread, the database server process memory. The IPC mechanism includes a specific method, such as a pipe, a message queue, or a signal.

In step 503, the application program sends a database operation command to the database client.

In step 504, the database client parses the operation command, and determines whether an operation requested by the operation command is one of preset read operations; if the operation is one of the preset read operations, step 505 is executed, or if the operation is not one of the preset read operations, step 507 is executed.

For example, an operation command is "select field A, field B from table 1 where condition 1". If it is found, by comparing keywords "select", "from", and "where" in the operation command with keywords of each operation of the preset read operations, that one of the preset read operations is matched, it is determined that the operation requested by the operation command is one of the preset read operations. In the embodiment, the preset read operations specifically include a read-only query, and do not include a select statement that includes group by or order by.

For another example, an operation command is "delete from table 2 where field 3=C". The database client parses the operation command; a keyword "delete" in the operation command is compared with each keyword of each operation of the preset read operations and does not match the keyword of each preset read operation; it is determined that the operation is not one of the preset read operations.

In step 505, the database client directly accesses the database server process memory, drives a storage engine, and obtains a query result. For example, when the operation command is "select field A, field B from table 1 where condition 1", data that is in columns of field A and field B in table 1 and that meets condition 1 is obtained.

In step 506, the database client returns a query result to the application program.

In step 507, the database client forwards, to the database server by using the IPC connection, the operation command that does not belong to the preset read operations, and specifically, sends the operation command to the agent thread in an executor of the database server.

The agent thread drives the storage engine, executes the operation command, and obtains an operation result. For example, when the operation command is "delete from table 2 where field 3=C", the database server executes an operation of deleting a row that meets field 3=C from table 2, and the agent thread returns, to the database client, a result code indicating whether the execution is successful or fails.

In step 508, the database client receives an operation result returned by the database server, and returns the result to the application program. Because no queried data but only a result code is returned, communication overheads used for copying data in database server memory to a communication buffer of the agent thread and sending data in the communication buffer to the database client are very small.

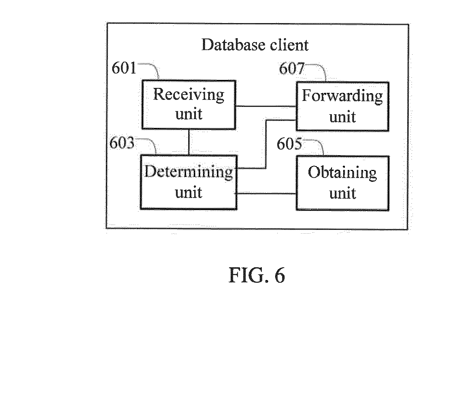

As shown in FIG. 6, an embodiment of the present invention further provides a database client that is configured to execute the foregoing database query method. The database client includes: a receiving unit 601, a determining unit 603, an obtaining unit 605, and a forwarding unit 607.

The receiving unit 601 is configured to receive an operation command pertaining to data managed by a database server.

The determining unit 603 is configured to determine whether an operation requested by the operation command received by the receiving unit is a read operation.

The obtaining unit 605 is configured to execute, when the determining unit 603 determines that the operation requested by the operation command is a read operation, the operation command via authorized access to database server process memory and obtain a query result.

The forwarding unit 607 is configured to forward, when the determining unit 603 determines that the operation requested by the operation command is not a read operation, the operation command to the database server for executing the operation requested by the operation command.

The receiving unit 601 is further configured to obtain access permission for the database server process memory, and request the database server to establish an agent thread. The obtaining access permission for the database server process memory means establishing a direct connection between the database client and the database server. The requesting the database server to establish an agent thread further includes establishing a communication connection between the database client and the database server. The communication connection may be specifically established by using one manner of inter-process communication, Transmission Control Protocol/Internet Protocol, and domain socket.

The receiving unit 601 is further configured to determine that obtaining the access permission for the database server process memory is required when one or more of the following conditions are met:
a database connection request received by the database client from an application program includes a direct connect indication; and
the database client determines that the operation requested by the operation command is a read operation.

That the determining unit 603 determines whether an operation requested by the operation command is a read operation includes: the determining unit 603 compares a keyword in the operation command with a keyword of an operation in a set of preset read operations, and if the keyword in the operation command matches the keyword of the operation in the set of preset read operations, determines that the operation command is one operation in the set of preset read operations; or the determining unit 603 compares a keyword in the operation command with a keyword of each operation in a set of pre-specified operations that do not belong to preset read operations, and if the keyword in the operation command does not match the keyword of each operation in the set of pre-specified operations that do not belong to the preset read operations, determines that the operation command is a read operation; or the determining unit 603 determines whether the operation requested by the operation command is a read operation according to a name or an attribute of the operation command.

Implementation of specific functions of units of the database client is the same as that in the embodiment shown in FIG. 4, and details are not repeatedly described herein.

According to a database client in the embodiment of the present invention, when a determining unit determines that an operation requested by an operation command is a read operation, a query result is obtained by means of authorized access to database server process memory, so as to achieve high performance when a read operation is preset; when the determining unit determines that the operation requested by the operation command is not a read operation, the operation command is forwarded to a database server, so that the database server executes the operation requested by the operation command, thereby ensuring reliability of a high-risk operation.

It should be noted that, for brief description, the foregoing method embodiments are represented as a series of actions. However, a person skilled in the art should appreciate that the present invention is not limited to the described order of the actions, because according to the present invention, some steps may be performed in other order or simultaneously. In addition, a person skilled in the art should also understand that all the embodiments described in this specification belong to exemplary embodiments, and the involved actions and modules are not necessarily mandatory to the present invention.

Content such as information exchange and an execution process between the units in the foregoing apparatus and system is based on a same concept as the method embodiments of the present invention. Therefore, for detailed content, refer to descriptions in the method embodiments of the present invention, and details are not described herein again.

Specific embodiments are used in this specification to describe the principle and implementation manners of the present invention. The foregoing embodiments are merely intended to help understand the method and idea of the present invention. In addition, with respect to the implementation manners and the application scope, modifications may be made by a person of ordinary skill in the art according to the idea of the present invention. Therefore, the specification shall not be construed as a limitation on the present invention.

## Claims

1. A computing device for executing a database operation command, comprising a database client and a database server, wherein:
the database client is configured to: receive an operation command pertaining to data managed by the database server;
determine whether an operation requested by the operation command is a read operation; and
if the operation requested by the operation command is a read operation, execute the operation command via authorized access to database server process memory, and obtain a query result; or
if the operation requested by the operation command is not a read operation, forward the operation command to the database server for executing the operation command.

2. The computing device according to claim 1, wherein the database client specifically comprises a connection interface, a parser, and an executor, wherein:
the connection interface is configured to receive the operation command pertaining to the data managed by the database server;
the parser is configured to parse the operation command received by the connection interface, determine whether the operation requested by the operation command is a read operation, and if the operation requested by the operation command is a read operation, send the operation command to the executor, or if the operation requested by the operation command is not a read operation, forward the operation command to the database server; and
the executor is configured to execute the operation command sent by the parser, and obtain the query result via the authorized access to the database server process memory.

3. The computing device according to claim 2, wherein the connection interface is further configured to obtain access permission for the database server process memory, and request the database server to establish an agent thread.

4. The computing device according to claim 2 or 3, wherein the connection interface is further configured to obtain the access permission for the database server process memory when it is determined that one or more of the following conditions are met:
a database connection request received by the database client from an application program comprises a direct connect indication; and
the parser determines that the operation requested by the operation command is a read operation.

5. The computing device according to claim 4, wherein the connection interface is further configured to determine that the database client and the database server are on a same host.

6. The computing device according to claim 3, wherein the parser communicates with the agent thread in the database server, and a manner of the communication comprises one of inter-process communication, Transmission Control Protocol/Internet Protocol, and domain socket.

7. The computing device according to any one of claims 2 to 6, wherein that the parser is configured to determine whether the operation requested by the operation command is a read operation comprises that:
the parser is configured to compare a keyword in the operation command with a keyword of an operation in a set of preset read operations, and if the keyword in the operation command matches the keyword of the operation in the set of preset read operations, determine that the operation requested by the operation command is a read operation.

8. The computing device according to any one of claims 2 to 6, wherein that the parser is configured to determine whether the operation requested by the operation command is a read operation comprises that:
the parser is configured to compare a keyword in the operation command with a keyword of each operation in a set of pre-specified operations that do not belong to preset read operations, and if the keyword in the operation command does not match the keyword of each operation in the set of pre-specified operations that do not belong to the preset read operations, determine that the operation requested by the operation command is a read operation.

9. The computing device according to any one of claims 2 to 6, wherein that the parser is configured to determine whether the operation requested by the operation command is a read operation comprises that:
the parser is configured to determine whether the operation requested by the operation command is a read operation according to a name or an attribute of the operation command.

10. The computing device according to any one of claims 3 to 9, wherein the database server comprises an executor and a storage engine, wherein:
the executor of the database server is configured to receive the operation command forwarded by the database client, access the database server process memory by using the agent thread, execute the operation command, and drive the storage engine; and
the storage engine is configured to store data of a database, is driven by the executor of the database client or the executor of the database server, and returns an operation result.

11. A method for executing a database operation command, applied to a database client, comprising:
receiving an operation command pertaining to data managed by a database server;
determining whether an operation requested by the operation command is a read operation; and
if the operation requested by the operation command is a read operation, executing the operation command via authorized access to database server process memory and obtaining a query result; or
if the operation requested by the operation command is not a read operation, forwarding the operation command to the database server for executing the operation requested by the operation command.

12. The method according to claim 11, before the executing the operation command, further comprising: obtaining access permission for the database server process memory, and requesting the database server to establish an agent thread.

13. The method according to claim 12, before the obtaining access permission for the database server process memory, further comprising: determining that one or more of the following conditions are met:
a database connection request received by the database client from an application program comprises a direct connect indication; and
it is determined that the operation requested by the operation command is a read operation.

14. The method according to claim 13, wherein the conditions further comprise: it is determined that the database client and the database server are on a same host.

15. The method according to any one of claims 11 to 12, wherein the forwarding the operation command to the database server, so that the database server executes the operation requested by the operation command specifically comprises:
forwarding, by the database client, the operation command to the database server, accessing, by the agent thread established by the database server, the database server process memory, and executing the operation command.

16. The method according to claim 12 or 15, wherein the database client communicates with the agent thread, and the communication may specifically use one manner of inter-process communication, Transmission Control Protocol/Internet Protocol, and domain socket.

17. The method according to any one of claims 11 to 15, wherein the determining whether an operation requested by the operation command is a read operation comprises:
comparing a keyword in the operation command with a keyword of an operation in a set of preset read operations, and if the keyword in the operation command matches the keyword of the operation in the set of preset read operations, determining that the operation requested by the operation command is a read operation; or
comparing a keyword in the operation command with a keyword of each operation in a set of pre-specified operations that do not belong to preset read operations, and if the keyword in the operation command does not match the keyword of each operation in the set of pre-specified operations that do not belong to the preset read operations, determining that the operation requested by the operation command is a read operation; or
determining whether the operation requested by the operation command is a read operation according to a name or an attribute of the operation command.

18. The method according to any one of claims 12 to 17, wherein the operation command carries a version number of the data managed by the database server, and
before the executing the operation command, the method further comprises: comparing the version number carried in the operation command with a version number of data stored in the database server, and if the version number carried in the operation command is inconsistent with the version number of the data stored in the database server, receiving, by the database client, an error code, so that the database client accesses the database server process memory and re-parses the operation command, wherein the operation command carries a current version number of to-be-operated data.

19. The method according to any one of claims 12 to 13, wherein:
when the operation command is to query all fields in a table, the executing the operation command via the authorized access to database server process memory and obtaining a query result comprises: obtaining, by the database client from the database server process memory, an address of a cursor in the table, accessing the cursor, and reading a record in the table by an entire row.

20. The method according to claim 19, wherein the obtaining a query result further comprises: establishing a mapping relationship between a query identifier of each field in the table to be queried by the operation command and a storage identifier of a corresponding field in the database server, and for the record in the table that is read by an entire row, adjusting, by the database client according to the mapping relationship between the storage identifier and the query identifier, order of fields in the record to order of fields in the operation command, and returning the query result to the application.

21. A computing device for executing a database operation command, comprising:
a memory, configured to store a computer-executable instruction; and
a processor, configured to execute the computer-executable instruction, so as to complete the following steps:
receiving an operation command pertaining to data managed by a database server;
determining whether an operation requested by the operation command is a read operation; and
if the operation requested by the operation command is a read operation, executing the operation command via authorized access to database server process memory and obtaining a query result; or
if the operation requested by the operation command is not a read operation, forwarding the operation command to the database server for executing the operation command.

22. The computing device according to claim 21, wherein before executing the operation command, the processor is further configured to: obtain access permission for the database server process memory, and request the database server to establish an agent thread.

23. The computing device according to claim 22, wherein the processor is further configured to determine that one or more of the following conditions are met:
a database connection request sent from an application program comprises a direct connect indication; and
it is determined that the operation requested by the operation command is a read operation.
